(19) Europäisches Patentamt
European Patent Office
Office européen des brevets

(11) **EP 4 072 871 B1**

(12) **FASCICULE DE BREVET EUROPEEN**

(45) Date de publication et mention
de la délivrance du brevet:
**29.11.2023 Bulletin 2023/48**

(21) Numéro de dépôt: **20842280.8**

(22) Date de dépôt: **10.12.2020**

(51) Classification Internationale des Brevets (IPC):
***B60C 11/24*** *(2006.01)* ***B60C 23/04*** *(2006.01)*

(52) Classification Coopérative des Brevets (CPC):
**B60C 11/246; B60C 11/24; B60C 23/0488;**
B60C 2019/004

(86) Numéro de dépôt international:
**PCT/FR2020/052368**

(87) Numéro de publication internationale:
**WO 2021/116610 (17.06.2021 Gazette 2021/24)**

(54) **PROCEDE D'OBTENTION DE LA DISTANCE PARCOURUE PAR UN PNEUMATIQUE EN ROULAGE**

FESTSTELLUNG DER ABGEFAHRENEN DISTANZ EINES BETRIEBENEN REIFEN

DETERMINATION OF THE DRIVEN DISTANCE OF A DRIVEN TIRE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.12.2019 FR 1914223**

(43) Date de publication de la demande:
**19.10.2022 Bulletin 2022/42**

(73) Titulaire: **COMPAGNIE GENERALE DES
ETABLISSEMENTS MICHELIN
63000 Clermont-Ferrand (FR)**

(72) Inventeur: **ALFF, Denis
63040 CLERMONT-FERRAND Cedex 9 (FR)**

(74) Mandataire: **M.F.P. Michelin
DCJ/PI - F35 - Ladoux
23 place des Carmes-Déchaux
63040 Clermont-Ferrand Cedex 9 (FR)**

(56) Documents cités:
**EP-A1- 3 299 765       EP-A1- 3 489 044
WO-A1-2019/101849       US-A1- 2014 107 946**

## Description

### Domaine de l'invention

La présente invention concerne les méthodes d'obtention de la distance parcourue par une enveloppe pneumatique d'un ensemble monté en condition d'usage.

### Arrière-plan technologique

La connaissance de la distance totale parcourue par une enveloppe pneumatique est importante pour évaluer l'état de celui-ci à l'ordre un aussi bien, par exemple, pour son usure que pour son vieillissement. C'est une grandeur facilement accessible qui est un reflet de l'état de l'enveloppe pneumatique. Ainsi, la connaissance de cette grandeur permet de planifier des opérations de maintenance sur l'enveloppe pneumatique afin d'effectuer une visite de contrôle de l'enveloppe pneumatique voire de remplacer l'enveloppe pneumatique afin de préserver la mobilité du véhicule qui est équipée par l'enveloppe pneumatique. Bien entendu, la connaissance de cette grandeur pour le pneumaticien qui a conçu et fabriqué l'enveloppe pneumatique a une valeur supérieure puisqu'il est le plus qualifié pour évaluer l'état de ce dernier. Enfin, cette distance parcourue totale est la sommation de distances parcourues régulièrement au cours de la vie de l'enveloppe pneumatique. L'accès à cette distance parcourue régulière est aussi un bon indicateur de l'état de l'enveloppe pneumatique notamment pour la prédiction de la durée de vie de celle-ci.

Dans l'état de la technique, il existe deux grandes familles de dispositifs d'évaluation de la distance parcourue qui sont délivrés par l'ensemble monté. Ainsi, le document US9566834B2, relate d'un dispositif monté sur la roue de l'ensemble monté de type TPMS permettant de remonter au kilométrage parcouru par l'ensemble monté en évaluant correctement les forces de centrifugation mesurées par un accéléromètre. Dans ce cas, il est nécessaire que l'accéléromètre soit monté sur la roue de l'ensemble monté qui est un solide indéformable. De plus, il faut corriger les signaux de l'accéléromètre par la température de l'ensemble monté mesurée au niveau du dispositif TPMS.

L'inconvénient de ce dispositif est qu'il faut avoir un TPMS (acronyme en anglais de « Tyre Pressure Monitoring system ») mesurant en plus l'accélération qui soit monté à la roue comme par exemple à la jante de valve. Pour des conditions extrêmes d'usage, en raison de l'échauffement thermique généré par le disque de frein, la correction de température est nécessaire en raison de l'échange thermique entre le disque de frein et la roue. Enfin, cela nécessite l'emploi d'un accéléromètre à cette seule finalité ce qui est coûteux bien qu'un accéléromètre puisse être utilisé pour détecter si l'ensemble monté tourne ou est à l'arrêt pour économiser l'énergie du dispositif lors des phases d'arrêt.

Parmi les dispositifs de la seconde famille, on peut citer le document US9050865B2 qui propose de disposer un accéléromètre, compris dans un TMS ( acronyme en anglais de Tyre Monitoring System »), sur la bande de roulement de l'enveloppe pneumatique pour évaluer la distance parcourue par l'enveloppe pneumatique. Le fonctionnement consiste alors d'évaluer le nombre de tours de roue sur un laps de temps permettant d'évaluer la distance parcourue et la vitesse moyenne de rotation. Puis il faut réitère la mesure après un certaine durée. Entre les deux phases de mesures, on estime la vitesse de rotation de l'enveloppe pneumatique par une interpolation entre les deux phases de mesures par exemple. Pour détecter le nombre de tour de roue, il convient d'employer au moins un accéléromètre de type choc pour enregistrer les fortes variations d'accélération qui apparaissent à l'entrée et la sortie de l'aire de contact qui correspond à la surface de contact de la bande de roulement de l'enveloppe pneumatique avec le sol. Ainsi, une valeur absolue de l'accélération radiale n'est nullement nécessaire. Cependant, la précision angulaire pour la détection de la longueur d'aire de contact permet ainsi de remonter à une estimation de la charge portée par l'ensemble monté.

Les documents suivants EP 3 489 044A1, WO 2019/101849A1 et EP 3 299 765A1 peuvent être aussi cités en tant qu'art antérieur.

L'inconvénient d'un tel dispositif réside dans la précision angulaire nécessaire à avoir au niveau de la détection de l'entrée et la sortie de l'aire de contact. De plus, le système est énergivore .Il faut évaluer les diverses périodes de temps, celles des phases de mesures et celles entre les mesures et effectuer des calculs du nombre de révolutions de l'ensemble monté construit à partir des vitesses de rotation de chaque phase de mesure et de la durée de la période sans mesure. Bien que le résultat soit précis sans employer un capteur accélérométrique mesurant la vraie accélération, le système n'est pas bien adapté à une durée de vie élevée de la source d'énergie du dispositif de mesure. De plus, la source d'énergie, généralement une batterie, étant située radialement extérieurement par rapport à l'axe de rotation de l'enveloppe pneumatique, elle est généralement petite et de ce fait de faible capacité pour réduire les forces centrifuges ce qui rend le dispositif peu adapté à un usage en service, notamment pour des grandes durée de vie de l'enveloppe pneumatique.

La présente invention porte sur un procédé d'obtention de la distance parcourue, comme défini dans la revendication indépendante 1 ci-jointe, par l'enveloppe pneumatique comprenant un dispositif électronique monté sur l'enveloppe pneumatique au droit du sommet qui est effectuée en temps réel, pouvant être obtenue directement au niveau du dispositif électronique, tout en étant économe en énergie.

**Description de l'invention**

L'invention porte sur une méthode d'obtention de la distance parcourue par une enveloppe pneumatique dans un état monté sur roue afin de constituer un ensemble monté, la dite enveloppe pneumatique ayant un sommet muni d'une bande de roulement pouvant être en contact avec le sol, deux flancs et deux bourrelets de révolution autour d'un axe naturel de rotation et un plan médian, l'intersection du plan médian et de l'axe naturel de rotation définissant un centre roue, comprenant les étapes suivantes :

- Fixer au moins un capteur sur l'enveloppe pneumatique au droit du sommet ayant une position radiale Rc par rapport à l'axe naturel de rotation dans son état monté sur roue apte à générer au moins un signal de sortie proportionnel à l'accélération subie par ledit capteur dans l'enveloppe pneumatique;
- Mettre l'ensemble monté en condition de roulage à une vitesse de rotation W, soumise à une charge Z;
- Réaliser l'acquisition après un intervalle de temps T d'un premier signal $Sig^i$, comprenant au moins l'amplitude de l'accélération selon la direction normale au sommet dans lequel les valeurs du premier signal $Sig^i$ inférieures à un seuil N représentent moins de 40 pour cent de la longueur du premier signal $Sig^i$ ;
- Identifier une première grandeur de référence $V^{reference}_i$ définie comme la racine carrée de la valeur moyenne du premier signal $Sig^i$ ;
- Déterminer la distance parcourue D pendant l'intervalle de temps T à partir de la formule suivante :

[Math 1]

$$D = A * T * V_i^{reference}$$

Où A est une fonction de l'enveloppe pneumatique, au moins proportionnelle à la racine carrée du rayon de roulement correspondant à la plus faible distance entre le centre roue et le sol en condition gonflé chargé.

- Optionnellement, déterminer la distance totale parcourue Df depuis un instant t0 jusqu'à un instant t+T, à partir de la formule suivante :

[Math 2]

$$D_f = D_0 + D$$

Où $D_0$ est la distance totale parcourue par l'enveloppe pneumatique depuis l'instant t0 jusqu'à l'instant t.

Cette méthode permet tout d'abord d'implanter le capteur au droit du bloc sommet ce qui permet d'employer le capteur à d'autres finalités comme par exemple l'estimation de la charge portée par l'ensemble monté. Et, l'éloignement du capteur des éléments chauffants du véhicule comme les disques de frein assurent une mesure de l'accélération normale qui ne soit pas perturbée par la thermique de l'ensemble monté. De ce fait, il n'est pas nécessaire d'apporter une correction sur la valeur de l'accélération normale en fonction de la température. De plus, le système est économe en énergie puisque les opérations mathématiques à effectuer se limitent au calcul d'une comparaison, d'une sommation, d'une valeur moyenne et d'une multiplication par une période de temps. Ainsi, il est tout à fait envisageable de réaliser ses opérations au sein d'un dispositif électronique embarqué dans l'enveloppe pneumatique bien qu'il soit tout aussi possible de transférer certaines de ces opérations au niveau du véhicule ou d'un serveur à l'aide de moyens de communication, de type radiofréquence par exemple. Dans ce cas, il est préférable que la périodicité de ces communications radiofréquences soit plus élevée que la périodicité entre deux phases de mesures surtout si la communication est consommatrice d'énergie. Enfin, en garantissant que les valeurs du premier signal $Sig^i$ sont situées au-dessus d'un seuil N au moins de façon proportionnelle, on s'assure que l'estimation de la distance parcourue D au niveau de la période de temps est réaliste, voire de bonne qualité. De plus, on garantit aussi que l'estimation de la distance parcourue pendant cette même période de temps est significative. En effet, le seuil N permet de prendre en compte les perturbations du signal liées au sol, ou à la chaine de mesure. De plus, si les valeurs du premier signal sont majoritairement négatives ou proches de la valeur nulle, cela signifie des incohérences dans le signal, ou une accélération centrifuge peu élevée ou une prise de mesure à des azimuts de l'enveloppe pneumatique correspondant à l'aire de contact. Dans tous ces cas, il convient de ne pas évaluer la distance parcourue parce que celle-ci n'est pas représentative de la réalité. Le seuil N permet de détecter ces valeurs particulières du premier signal $Sig^i$.

Le fait de positionner le capteur sur l'enveloppe pneumatique au niveau du sommet, contrairement au document US9566834B2 de l'état de la technique qui le positionne sur la roue, rajoute énormément de bruit sur le signal accélérométrique notamment par les chocs enregistrés par le capteur lors de l'entrée et la sortie de l'aire de contact ou par la rugosité du sol sur lequel l'ensemble monté roule. Par exemple, le passage de l'aire de contact par le capteur se traduit par une valeur de l'accélération normale mesurée proche de zéro, pas du tout représentatif de l'accélération centrifuge.

Ces phénomènes sont fortement atténués lorsque l'implantation du capteur est sur la roue qui est un objet indéformable par rapport à l'enveloppe pneumatique en condition de roulage. Ainsi, quelle que soit la position angulaire du capteur au moment de l'enregistrement du signal, on obtient une bonne approximation de l'accélération centrifuge en améliorant le rapport signal/bruit. Ceci justifie de prendre une unique mesure de l'accélération normale dans le document de l'état de la technique.

Pour pallier cette difficulté, il est nécessaire de faire la moyenne des accélérations normales du capteur afin d'obtenir une valeur réaliste de l'accélération centrifuge tant que les valeurs inférieures à un seuil N ne sont pas majoritaires dans le premier signal. Par exemple ce seuil N est la valeur nulle.

Enfin, l'estimation des distances parcourues D et Df nécessitent de renseigner deux variables. La première est la période de temps T qui s'est écoulée entre deux prises de mesure consécutives. La seconde, la fonction A est proportionnelle à la racine carré du rayon de roulement Rp. On entend ici par rayon de roulement Rp, la plus petite distance entre le centre roue et les points extérieurs de l'enveloppe pneumatique montée, chargée en condition de roulage. En raison de l'écrasement de l'enveloppe pneumatique au sol par l'application de la charge Z, cette distance est généralement la projection orthogonale du centre roue sur le sol. Concernant la distance totale parcourue Df par l'enveloppe pneumatique depuis un temps to correspondant généralement à sa première mise en usage sur véhicule, il suffit d'incrémenter les distances parcourues pendant chaque période de temps T' précédentes la période T afin de constituer la distance D0 à laquelle on ajoute la distance parcourue D durant la période T. Bien entendu, ces périodes de temps T' n'ont pas de raison particulière d'être identiques ou égales à la période T. De même, la fonction A de l'enveloppe pneumatique peut évoluer d'une période de temps à une autre par des facteurs extérieures ou internes à l'ensemble monté.

Préférentiellement, l'intervalle de temps T étant fixe entre chaque prises de mesures, et préférentiellement si l'obtention d'un premier signal $Sig^i$ à un instant t n'est pas possible, la grandeur de référence $V^{reference}_i$ prend une valeur forfaitaire $V^{forfaitaire}$, la distance totale parcourue $D_f$ par l'enveloppe pneumatique est déterminée par la formule suivante :

[Math 3]

$$D_f = T * \sum_{i=0}^{n} \left( A * V_i^{reference} \right)$$

Ainsi, il est possible de sortir la période de temps T du signe somme. Ainsi, cela réduit le nombre de calculs à effectuer ce qui est plus économe en énergie et en temps ce qui rend la méthode efficace en temps de calculs dans un dispositif électronique embarqué dans le pneumatique.

De plus, si on réalise un enregistrement du signal accélérométrique mais que celui-ci est fortement perturbée par des sollicitations mécaniques, thermiques ou électromagnétiques particulières sur l'ensemble monté, il est possible de substituer une valeur forfaitaire à la grandeur de référence pour une mesure isolée afin de ne pas fausser la distance parcourue totale. Cette valeur forfaitaire peut par exemple prendre la valeur précédente de la grandeur de référence Vreference i-1, ou une fraction de celle-ci voire la valeur nulle.

Très préférentiellement, la fonction A étant une constante, la distance totale parcourue est déterminée par la formule suivante :

[Math 4]

$$D_f = T * A * \sum_{i=0}^{n} V_i^{reference}$$

Ainsi, il est possible de sortir fonction A du signe somme. Ainsi, cela réduit le nombre de calculs à effectuer ce qui est plus économe en énergie et en temps de calculs ce qui rend la méthode efficace dans un dispositif électronique embarqué dans le pneumatique. A cet effet, il convient de prendre comme approximation que le rayon de roulement $R_P$ n'évolue pas au cours de la durée de vie de l'enveloppe pneumatique. Il est alors calculé une et une seule fois sur la base des informations de marquage de l'enveloppe pneumatique en application les règles de calculs de l'ETRTO (acronyme en anglais « European Tyre and Rim Technical Organisation »). Par exemple la charge Z appliquée à l'enveloppe pneumatique est celle préconisée par l'indice de charge marquée sur le flanc de l'enveloppe pneumatique et les règles de calcul de l'ETRTO. De plus, la pression de gonflage éventuelle P est celle la pression de gonflage recommandée indiquée sur le flanc et éventuellement les règles de calculs de l'ETRTO.

Selon un mode de réalisation spécifique, le premier signal Sig' étant délimité sur un nombre $N^{TdR}$ de tours de roue, $N^{TdR}$ étant supérieur ou égale à 1, préférentiellement $N^{TdR}$ est un entier, afin de construire un signal tour de roue $Sig^{TdR}{}_i$, la grandeur de référence $V^{reference}{}_i$ est la racine carrée de la valeur moyenne du signal tour de roue $Sig^{TdR}{}_i$, ramené sur un tour.

Ici, le fait que le premier signal $Sig^i$ correspond à au moins une rotation complète de l'ensemble monté, on assure que les valeurs de faible niveau représentent naturellement moins de 40 pourcents de la longueur du premier signal Sig'. De plus, la valeur moyenne de l'accélération normale au sommet sur un tour de roue est une grandeur intrinsèque de la rotation de l'ensemble monté ce qui permet d'améliorer sensiblement la qualité de l'estimation des distances parcourues notamment sur de faibles distances pour une évaluation quotidienne par exemple. Si, le premier signal $Sig^i$ est délimité sur plusieurs tours de roue, la répétition des tours de roue permet de lisser la grandeur intrinsèque recherchée en diminuant le poids de la discrétisation spatiale d'enregistrement du premier signal Sig'. Ainsi, il est préférable que le premier signal $Sig^i$ représente plusieurs tours de roue pour améliorer la qualité de la prédiction. De plus, même si le signal ne représente pas un nombre entier de tour de roue, le reliquat ne perturbera pas de manière significative la grandeur intrinsèque recherchée. Ainsi une approximation de très bonne qualité des distances parcourues par l'ensemble montée est obtenue. Bien entendu, en l'absence de tout reliquat, en dehors des erreurs de discrétisation, ce qui revient à délimiter le premier signal Sigi sur un nombre entier de tour de roue, on obtient une meilleure précision sur la grandeur intrinsèque recherchée conduisant à la meilleure estimation des distances parcourues.

Selon un mode de réalisation particulier, ayant identifié une première série d'incrément I correspondant à l'abscisse u du au moins un premier signal $Sig^i$ où le premier signal Sig' franchit une valeur seuil B, on délimite le premier signal $Sig^i$ entre un premier incrément Imin et un second incrément Imax, avec max égal à min+2k, k étant un entier naturel strictement positif, sur un nombre entier de tour de roue $N_{TdR}$ défini par la formule :

[Math 5]

$$N_{TdR} = \frac{(max - min)}{2}$$

C'est une manière simple de délimiter le premier signal $Sig^i$ sur un nombre entier de tour de roue en minimisant les opérations complexes sur les valeurs. Ceci est peu énergivore en temps de calculs et en espace mémoire ce qui permet une implémentation dans un dispositif électronique embarqué dans l'enveloppe pneumatique tout en évitant une grosse consommation d'énergie limitant ainsi la taille de la source d'énergie du dispositif électronique. Ici, on ne cherche pas à savoir si le franchissement de la valeur seuil B se fait par le dessus ou le dessous, on note seulement, le franchissement de celle-ci. Ainsi, pour délimiter le premier signal $Sig^i$ sur un nombre entier de tour de roue, il faut prendre tous les incréments pairs ou impairs. Si, on évalue le sens de franchissement de la valeur seuil B, on identifierait directement et seulement des abscisses u correspondant soit aux incréments I paires ou impairs. C'est envisageable mais le coût de calcul serait plus élevé.

Selon un mode de réalisation très particulier, on identifie la première série d'incréments I par la combinaison des étapes suivantes :

- Définir la valeur seuil B qui est une valeur comprise entre 0,1 et 0,5 du au moins un maximum de la au moins une partie du premier signal $Sig^i$ ;

- Déterminer un second signal d'abscisse u comme une fonction de la au moins une partie du premier signal $Sig^i$ et de la valeur seuil B;

- Identifier la première série des incréments I correspondant à l'abscisse u de la au moins une partie du premier signal $Sig^i$ où le second signal franchit un seuil E, préférentiellement le second signal étant la différence entre le premier signal $Sig^i$ et la valeur seuil B, le seuil E est la valeur nulle ou le second signal étant le rapport entre le premier signal $Sig^i$ et la valeur seuil B, le seuil E est la valeur unité.

Cette méthode est facilement réalisable sur un dispositif électronique embarqué sur l'enveloppe pneumatique puisque les opérations mathématiques à effectuer sont élémentaires. La détermination de la valeur seuil nécessitent juste de retenir la valeur maximale d'une partie du premier signal $Sig^i$. En effet, la forme spécifique de l'accélération normale au sommet d'une enveloppe pneumatique chargée et en rotation assure de cette manière de créer une valeur seuil B permettant de dissocier la partie du premier signal $Sig^i$ correspondant au passage dans l'aire de contact de l'enveloppe pneumatique. Cependant, il suffit juste de délimiter cette zone par rapport à l'autre pour positionner les incréments I. Ensuite, le choix de la seconde fonction comme étant la différence ou le rapport entre le premier signal et la valeur seuil permet de limiter les temps de manipulation des données au niveau du dispositif électronique et l'utilisation de fonction élémentaire de franchissement de seuil.

Selon un mode de réalisation avantageux, l'identification des incréments comprend les étapes suivantes ;

- Créer une seconde série d'incréments J correspondant à une abscisse u intermédiaire, préférentiellement située entre un huitième et sept huitième, très préférentiellement située à la longueur médiane, de la longueur définie par les abscisses u des incréments I de parités identiques et consécutifs, et

- Construire le signal tour de roue $Sig_{TdR}^i$ entre un premier incrément $J_{min}$ et un second incrément $J_{max}$, min et max étant de même parité.

Ce mode de réalisation permet d'obtenir une délimitation du premier signal sur un nombre entier de tour de roue. Mais, cette fois-ci la délimitation n'est pas faite explicitement par l'entrée ou la sortie de l'aire de contact mais à une position intermédiaire, très préférentiellement à l'opposée de l'aire de contact. En fait, il faut s'éloigner de la zone correspondant à la fois à l'entrée et la sortie de l'aire de contact qui génère de fortes variations de l'accélération normale de tout point du sommet de l'enveloppe pneumatique. Ainsi, il est préférable en général que le point intermédiaire se situe entre le premier et le septième huitième de tour défini par les incréments I de parités identiques. De ce fait, la valeur moyenne des incréments du premier signal $Sig^i$ est moins sensible aux erreurs générées par la discrétisation spatiale du tour de roue. En effet, la sensibilité de l'accélération normale à l'entrée et la sortie de l'aire de contact est élevée, une petite erreur de localisation se traduisant par de fortes variations de l'accélération normale, ce qui nécessite pour améliorer la précision de l'estimation de la distance parcourue de moyenner sur plus de points de mesure. Dans le cas où les délimitations du signal sont situées en dehors de la zone d'influence de l'aire de contact, l'erreur sur la discrétisation spatiale est moindre puisque la valeur enregistrée est généralement proche de la valeur intrinsèque recherchée. Ainsi, il est plus aisée de limiter la longueur du premier signal $Sig^i$ à un seul tour de roue ce qui limite aussi le nombre de points de mesure.

Avantageusement, l'acquisition du premier signal $Sig^i$ a lieu si la vitesse de rotation W de l'enveloppe pneumatique est supérieure à un seuil Wseuil définie par la formule suivante :

[Math 2]

$$W_{seuil} = \frac{12}{\sqrt{Dev}}$$

où Dev est le développement de l'enveloppe pneumatique.

Ainsi, si la vitesse de roulage est au-delà de la valeur seuil, il est aisé de dissocier le premier signal $Sig^i$ par rapport à la valeur seuil N et ce quels que soient les aléas dans le premier signal $Sig^i$ comme, par exemple, une forte macro rugosité de la chaussée, des perturbations électromagnétiques dans la chaine de mesure, des vibrations au niveau de l'enveloppe pneumatique. Lorsque ce seuil $W_{seuil}$ n'est pas atteint, il est possible d'appliquer comme grandeur de référence $V_{reference}^i$ une valeur forfaitaire $V_{forfaitaire}$ qui peut être la valeur nulle.

L'accélération de référence $\gamma^{reference}$ correspond à un état neutre de l'enveloppe pneumatique pour lequel la charge est nulle. En pratique, cela se traduit par un ensemble monté comprenant l'ensemble monté qui roule sans se déformer au sol afin de constituer une aire de contact. Finalement, cela correspond à l'accélération que subirait le capteur si il était monté sur l'enveloppe pneumatique celle-ci tourne librement autour de son axe naturel de rotation.

De ce fait, l'accélération de référence $\gamma^{reference}$ est alors simplement l'accélération centrifuge subie par le capteur monté sur l'enveloppe pneumatique tournant librement. L'identification de l'accélération de référence nécessite alors la détermination de deux paramètres, la position radiale Rc du capteur par rapport à l'axe naturel de rotation et la vitesse de rotation W de l'enveloppe pneumatique sur laquelle est fixé le capteur.

Selon un deuxième mode de réalisation la détermination de l'accélération de référence $\gamma^{reference}$ est définie par la valeur moyenne du signal tour de roue $Sig^{TdR}$.

En effet la méthode estime que dans son état de rotation libre à la vitesse de rotation W, l'enveloppe pneumatique ou tout capteur qui lui est attaché subi une accélération centrifuge proportionnelle à sa position radiale par rapport à l'axe naturel de rotation. De plus, lors de la mise sous charge par l'écrasement de l'enveloppe pneumatique sur un sol rigide, l'enveloppe pneumatique se déforme de façon à répartir l'énergie de déformation générée par cette charge entre deux situations. La première situation correspond à la condition de déplacement imposé au niveau de l'aire de contact tendant à diminuer l'énergie centrifuge. L'autre situation correspond à la condition d'énergie imposée sur l'enveloppe pneumatique hors de l'aire de contact. L'énergie imposée est alors le complémentaire de la diminution de l'énergie centrifuge correspondant à la première situation. De ce fait, la valeur moyenne du signal tour de roue, sur un nombre entier de tours de roue, que l'enveloppe pneumatique soit ou non soumis à une charge Z, correspond à l'accélération centrifuge subie par le capteur.

Préférentiellement, ayant phasé le signal tour de roue $Sig^{TdR}$ par rapport à une position angulaire de l'enveloppe pneumatique, une correction Corr est apportée au signal tour de roue $Sig^{TdR}$ pour prendre en compte l'effet de la gravité terrestre.

La correction de la gravité terrestre permet de minimiser l'erreur sur la déformation de l'enveloppe pneumatique en particulier pour les vitesses de roulage W basses. En effet, le capteur, lors du roulage de l'enveloppe pneumatique, fait une révolution autour de l'axe naturel de rotation. Le signal de sortie du capteur étant proportionnel à l'accélération radiale sera pollué par la gravité terrestre. Sur un tour de roue, la gravité terrestre va générer un signal sinusoïdal d'amplitude g qui est fonction de l'altitude du capteur dans le repère de la Terre. Il faut donc retirer ce signal parasite Corr du premier signal $Sig^i$ ce qui nécessite un recalage du premier signal $Sig^i$ par rapport à une position angulaire de l'enveloppe pneumatique.

Bien entendu, plus la vitesse de rotation W de l'enveloppe pneumatique est élevée, plus l'accélération centrifuge subie par le capteur devient prédominant par rapport à ce signal parasite.

Très avantageusement, l'intervalle de temps T entre deux évaluations de la grandeur de référence $V^{reference}$ est inférieur ou égal à 10 minutes, préférentiellement inférieur ou égale à 5 minutes, très préférentiellement inférieur à 2 minutes.

La simplicité de la méthode repose en partie sur cet intervalle de temps T, plus celui-ci est élevé, moins de calculs sont à effectuer au niveau du dispositif électronique embarqué ce qui permet d'économiser de l'énergie. Pour autant, il ne faut pas sacrifier la qualité de l'estimation pour des raisons d'économies d'énergie. Comme l'idée générale est d'obtenir une distance parcourue sur une journée, une semaine, un mois ou durant la vie de l'enveloppe pneumatique, il n'est pas nécessaire d'avoir une mesure exacte à chaque instant. En effet, si, statistiquement le résultat est correct à l'échelle de temps souhaité, l'objectif est atteint. A cet effet, une mesure toutes les 10 minutes permet d'obtenir un estimatif correct à la journée. Pour autant, il est nécessaire de ramener cet intervalle de temps T à 5 minutes quel que soit le profil d'usage de l'enveloppe pneumatique. Enfin, afin d'être précis pour une évaluation à l'échelle de quelques heures, il est nécessaire de descendre l'intervalle de temps à 2 minutes. Pour autant, il n'est pas nécessaire d'avoir un intervalle de temps en dessous de 30 secondes pour améliorer la qualité de l'estimation de la distance parcourue totale pour une échelle de temps d'au moins une heure en usage de l'enveloppe pneumatique. Plus aucun gain de précision ne peut être atteint de manière significative pour un intervalle de temps inférieur à 30 secondes pour un usage standard de l'enveloppe pneumatique.

Spécifiquement, l'enveloppe pneumatique définissant un rayon de roulement $R_P$, la fonction A est proportionnelle au rapport B suivant :

[Math3]

$$B = \frac{R_P}{\sqrt{R_C}}$$

En effet, la fonction A peut être définie par le rapport B entre le rayon de roulement $R_P$ et le rayon de position $R_C$ du capteur. Les deux rayons sont déterminés par rapport à l'axe naturel de rotation de l'ensemble monté. Pour autant, le rayon $R_P$ est évalué dans l'état chargé de l'enveloppe pneumatique tandis que le rayon de positionnement Rc est déterminé dans l'état non chargé de l'ensemble monté. Bien entendu, la proportionnalité entre la fonction A et le rapport B peut-être la valeur unité ou un autre paramètre.

Très spécifiquement, le rayon de roulement $R_P$ est fonction de la charge Z portée par l'enveloppe pneumatique.

Bien qu'une valeur nominale du rayon de roulement $R_P$ puisse être employée comme étant la valeur du rayon écrasé de l'enveloppe pneumatique sur un sol plan lorsque celle-ci est montée sur une jante, d'un diamètre et d'une largeur prédéfinies sous éventuellement un pourcentage de charge nominale maximale indiquée par son indice de charge, et éventuellement gonglée à la pression recommandée, la valeur du rayon de roulement $R_P$ évolue réellement avec la charge Z portée. Pour autant, la variation du rayon de roulement peut être négligée en première approximation par rapport à la valeur même du rayon de roulement $R_P$ ; Il suffit alors soit de prendre une grandeur représentative ou prendre en compte son évolution par une dépendance à la chargée Z appliquée au moment de chaque mesure.

Très spécifiquement, l'enveloppe pneumatique étant pressurisée à une pression de gonflage P, le rayon de

roulement $R_p$ et la position radiale Rc est fonction de la pression de gonflage P de l'enveloppe pneumatique.

De même, dans le cas d'une enveloppe pneumatique pressurisée, le rayon de roulement $R_P$ et le rayon de positionnement $R_C$ peuvent être influencés par la pression de gonflage de l'enveloppe pneumatique. Dans ce cas, il peut être nécessaire de tenir compte éventuellement de l'évolution de ces deux rayons avec la pression de gonflage pour accroître la précision sur les distances parcourues par l'enveloppe pneumatique. En premier approximation, la pression de gonflage déterminée par les règles de l'ETRTO peut être appliquée pour obtenir une première estimation largement suffisante des distances parcourues au totale.

Très spécifiquement, le rayon de roulement $R_p$ est fonction de la distance totale parcourue Df de l'enveloppe pneumatique.

Le rayon de roulement $R_P$ évolue par l'usure naturelle de la bande de roulement. L'usure de la bande de roulement est à l'ordre un proportionnelle à la distance totale parcourue Df par l'enveloppe pneumatique. Ainsi, prendre en compte cette dépendance améliore la précision de l'évaluation de la distance parcourue. Il faut prendre en compte, par exemple, son évolution par une dépendance à la distance totale parcourue de type forfaitaire par morceaux sur des grandes périodes de temps, bien supérieure à l'intervalle de temps T entre deux mesures. Pour autant, la variation du rayon de roulement $R_P$ peut être négligée en première approximation par rapport à la valeur même du rayon de roulement $R_P$ ; Il suffit alors soit de prendre une grandeur représentative du rayon de roulement $R_P$ comme précédemment.

Selon un mode de réalisation spécifique, l'acquisition du premier signal $Sig^i$ est effectuée à une fréquence d'échantillonnage constante.

Si l'échantillonnage est régulier, sachant que les variations de la vitesse de rotation W de l'ensemble monté sont faibles sur un faible nombre de tour de roue, cela revient à une discrétisation spatiale du premier signal Sigi qui est quasi constante spatialement. Ainsi, la méthode devient robuste au niveau de la grandeur de référence $V^{reference}$ en tant que valeur moyenne d'un segment de tour de roue dont les échantillons sont spatialement réparties. De plus, la mise en oeuvre de cet échantillonnage constant est facile à réaliser au niveau du dispositif électronique embarqué dans l'enveloppe pneumatique.

Selon un mode de réalisation avantageux, la discrétisation spatiale d'échantillonnage du premier signal $Sig^i$ est inférieure à 10 degrés, préférentiellement inférieure à 6 degrés, très préférentiellement inférieure à 3 degrés.

Bien qu'en soit ce ne soit pas indispensable, il est préférable d'avoir une discrétisation spatiale de l'accélération au tour de roue minimale afin d'identifier dans des conditions normales de roulage de l'ensemble monté l'aire de contact, c'est-à-dire la zone de l'enveloppe pneumatique en contact avec le sol. Notamment, si la longueur du signal $Sig^i$ est longue, cette information permet d'identifier indirectement les incréments délimitant le passage dans l'aire de contact. Bien entendu, plus la discrétisation spatiale du premier signal Sigi est fine, plus la détection est précise et la longueur du premier signal est courte. Cela permet d'avoir alors une très bonne évaluation de la grandeur de référence $V^{reference}$ sur un unique tour de roue ou sur un nombre réduit de tours de roue. Ainsi, la longueur du premier signal Sig' est toujours environ la même avec deux façons de mesurer, soit sur un nombre réduit de tour de roue avec une discrétisation élevée, soit sur un grand nombre de tour de tour en discrétisation spatiale faible ou moyenne. Les deux solutions donnent une évaluation correcte des distances parcourues des qu'au moins un tour de roue est réalisé.

Par exemple si on souhaite que l'évaluation de la distance parcourue par l'enveloppe pneumatique ait lieu au niveau de l'ensemble monté, il faut que le capteur soit associé à un organe électronique comprenant un microcontrôleur, un espace mémoire, une batterie et une horloge. Alors, la discrétion spatiale envisagée avec une fréquence d'échantillonnage constante permet de réaliser des opérations élémentaires au niveau du microcontrôleur en minimisant la consommation de la batterie. De plus, la discrétisation minimale de l'ordre de 36 points au tour de roue permet de limiter le nombre d'opérations et de transfert vers l'espace mémoire. Pour autant, la précision obtenue sur la déformation de l'enveloppe pneumatique est bonne tout en ayant économisé la batterie de l'organe électronique. Cela permet de ne stocker ou de ne transférer que des valeurs scalaires intermédiaires de la méthode.

## Description brève des dessins

L'invention sera mieux comprise à la lecture de la description qui va suivre dans le cas d'une application à des bandages pneumatiques. Cette application est donnée uniquement à titre d'exemple et faite en se référant aux bs annexées dans lesquelles :

- La Fig 1 est l'exemple de premiers signaux $Sig^i$ selon deux modes de réalisation de la méthode.

- La Fig 2 représente plusieurs premiers signaux $Sig^i$ de la méthode selon la fréquence d'échantillonnage et la longueur du signal.

- La Fig 3 représente le signal tour de roue $Sig^{TDR}$ et son identification avec un premier mode de réalisation.

- La Fig 4 représente le signal tour de roue Sig$^{TdR}$ et son identification avec un autre mode de réalisation.

- La Fig 5 représente le signal tour de roue Sig$^{TdR}$ lors d'un roulage à vitesse de rotation W variable.

- La Fig 6 représente le profil de vitesse d'un véhicule routier en usage journalier.

- La Fig 7 représente les écarts de distances journalières parcourues d'une part évaluées par la méthode et d'autre part mesurée sur véhicule en fonction de l'intervalle de temps T de la méthode.

**Description détaillée de modes de réalisation**

Pour la mise en oeuvre de l'invention, il faut équiper une enveloppe pneumatique d'un organe électronique comprenant un capteur, un microcontrôleur, une horloge, un espace mémoire et un moyen de stockage d'énergie, et des moyens de communications Radio Fréquence en émission et éventuellement en réception. L'enveloppe pneumatique comprend un sommet, deux flancs et deux bourrelets de révolution autour d'un axe naturel de rotation. L'enveloppe comprend aussi un plan médian équidistant des deux bourrelets, l'intersection du plan médian et de l'axe naturel de rotation définissant un centre roue.

Le capteur est fixé sur l'enveloppe pneumatique au droit du sommet, en visà-vis d'un élément de matière en saillie ou d'un sillon longitudinal qui sont des zones de rigidité homogène, à une position radiale Rc fixe par rapport à l'axe naturel de rotation dans son état monté sur roue. Le capteur est apte à générer au moins un signal de sortie proportionnel à l'accélération normale au sommet subie par le capteur dans l'enveloppe pneumatique. En fait, ce capteur peut être mono axe, auquel cas, il faut le positionner de façon radiale. Il peut aussi être aussi constitué d'une pluralité de capteurs mono axes. Dans ce cas, il convient de bien identifier l'orientation de chacun des capteurs mono axes par rapport au repère de l'enveloppe pneumatique afin de reconstruire l'accélération normale au sommet de l'enveloppe pneumatique. Le capteur prend en compte la composante continue de l'accélération. Le capteur peut être un accéléromètre de technologie piezorésistive ou capacitive.

L'organe électronique, alimenté par le moyen de stockage d'énergie, est piloté par le microcontrôleur à l'aide de l'horloge et dans lequel sont aussi implantés les algorithmes de calcul qui permettent de déterminer par exemple la grandeur de référence V$^{reference}$ de l'enveloppe pneumatique en utilisant les signaux issus de l'élément capteur. Les moyens de communication radiofréquence d'émission servent à transmettre les informations calculées, et ceux de réception de recevoir des instructions de fonctionnement ou des informations utiles dans les algorithmes de calcul. Idéalement, cet organe électronique comprends ou est associé avec d'autres éléments de mesures (tels que des moyens d'évaluation de la pression de gonflage, de la température de la cavité interne de l'ensemble monté, du niveau d'usure de la bande de roulement, etc...) afin de mutualiser les organes et optimiser les coûts de mise en oeuvre.

Ici, le capteur est mis en route par l'intermédiaire du microcontrôleur lorsque l'enveloppe pneumatique est en condition de roulage. Bien entendu, on peut sélectionner une valeur seuil de vitesse de rotation W à partir de laquelle l'acquisition d'un signal en sortie du capteur est effectuée. L'organe électronique dispose d'un espace mémoire adaptée au type d'analyse que l'on souhaite effectuer. En fait la capacité de cet espace mémoire est prédéfinie selon l'usage de l'organe électronique. C'est le microcontrôleur qui pilote le rangement des valeurs du capteur vers l'espace mémoire. De plus, le microcontrôleur est apte à effectuer des opérations mathématiques et logiques élémentaires sur un nombre de données réduites. Si, les opérations mathématiques et logiques sont plus complexes ou que le nombre de données à manipuler devient conséquent, le microcontrôleur est remplacé par un microprocesseur. Enfin l'organe électronique est alimenté en énergie par un moyen de stockage. Le plus simple comme moyen de stockage est l'utilisation d'une batterie. Cependant, une capacité de grande dimension rechargeable à l'aide d'un élément piézoélectrique pourrait être envisagée

La fréquence d'échantillonnage de l'organe électronique permet de couvrir une large bande de vitesse de rotation W avec une discrétisation spatiale de moins de 10 degrés. Selon un mode de réalisation particulier, la fréquence d'échantillonnage est adaptative sur commande ou en réponse à un signal comme par exemple la vitesse de rotation W de l'enveloppe pneumatique.

De façon optionnelle, l'organe électronique contient ou et apte à obtenir l'identification de l'enveloppe pneumatique. Cette information est utile pour choisir un set de données utiles pour les algorithmes de calculs au niveau de l'organe électronique. Si, l'organe électronique doit obtenir l'identification du pneumatique ou recevoir des commandes pour effectuer une mesure, l'organe électronique est équipé d'un moyen de réception radiofréquence. Celui-ci fonctionne dans la gamme des basses fréquences, idéalement à la fréquence de 125KHz afin de s'affranchir des perturbations générées par les zones métalliques de l'enveloppe pneumatique et de son environnement proche dans le véhicule.

Selon un mode de réalisation spécifique, l'organe électronique dispose de moyens d'émission radiofréquence, spécifiquement dans la bande UHF (acronyme d'Ultra Hautes fréquences), en particulier aux alentours de 433MHZ ou 900MHz ou la bande dite BLE (acronyme en anglais de Bluetooth Low Emission) qui constituent des bandes de fréquences libres. De plus, la bande des UHF permet d'avoir des tailles d'antenne réduites facilitant l'intégration de l'organe électronique au sein de l'enveloppe pneumatique.

Cette communication en émission est utile pour transmettre les données de la méthode vers le véhicule ou l'extérieur du véhicule. Il est possible soit d'émettre le train de données correspondant à l'acquisition du premier signal $Sig^i$ ou du signal tour de roue $Sig^{TdR}$ ou de transmettre des résultats intermédiaires qui auront été calculés au niveau de l'organe électronique. Ces deux derniers modes d'émission sont nécessairement moins coûteux en énergie pour l'organe électronique puisque le flux de données est moins conséquent. Or, l'émission radiofréquence est un poste consommateur en énergie par rapport à des opérations mathématiques et logiques.

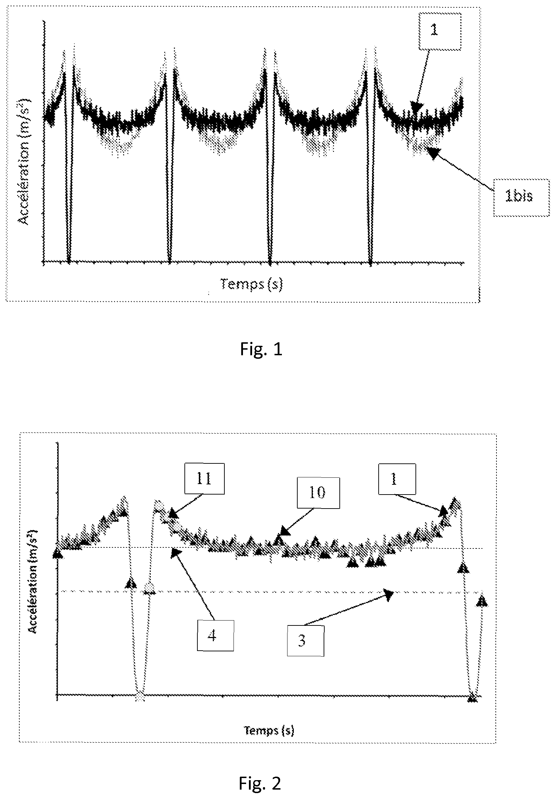

La Fig 1 présente un premier signal 1bis brut en gris correspondant à l'accélération normale au sommet d'une enveloppe pneumatique de type poids lourd roulant à une vitesse de rotation W constante. Régulièrement, de façon périodique, la courbe 1bis passe par une valeur basse, quasi nulle. Ce phénomène périodique correspond à la traversée de l'aire de contact de l'enveloppe pneumatique par le capteur. La transition entre le passage du capteur entre l'aire de contact du pneumatique et l'autre partie de l'enveloppe pneumatique s'effectue brutalement au travers de fronts descendants ou montants selon que l'on soit à l'entrée ou la sortie de l'aire de contact. De plus, on note que le premier signal 1bis à une échelle de l'ordre du tour de roue suit une porteuse, le premier signal 1bis oscille à une fréquence plus élevée que la fréquence du tour de roue autour de cette porteuse. Ces oscillations correspondent aux bruits du premier signal 1bis du capteur dus aux divers aléas dont la macrorugosité de la route.

La courbe indexée 1 en noir, représente le même signal accélérométrique corrigé seulement de la gravité terrestre que l'on nommera premier signal corrigé 1. La correction est ici sinusoïdale en ayant appliqué la correction sur un point situé au centre de l'aire de contact, c'est-à-dire à égal distance des deux fronts délimitant la partie du signal dont la valeur est quasi nulle. On observe que le premier signal 1 est plus plat entre les zones caractérisant l'aire de contact. Il est préférable, bien que non indispensable, d'effectuer les diverses étapes de la méthode sur ce premier signal corrigé 1.

La Fig. 2 illustre l'impact de la discrétisation spatiale et la longueur du premier signal $Sig^i$ sur la valeur d'accélération de référence $\gamma^{reference}$ sur laquelle repose la grandeur de référence $V^{reference}$ et la méthode d'évaluation de la distance parcourue D et $D_f$ par l'enveloppe pneumatique. Ainsi, est représentée par la courbe continue en gris foncé un premier signal référencé 1 correspondant à l'accélération normale corrigée de la gravité avec un pas angulaire de un degré s'étendant sur plusieurs tours de roue dont on a volontairement limité la représentation sur environ un tour. La valeur moyenne de ce signal, qui par définition tend vers l'accélération de référence $\gamma^{reference}$, est représentée par la ligne droite continue 4. Que le signal soit corrigé au non de la gravité, on aurait obtenu la même valeur moyenne sur un nombre entiers de tours de roue. Cette valeur est notre étalon est vaut 100 par défaut.

Un second premier signal $Sig^i$ représenté par les triangles noirs référencée 10 correspond au même signal 1 dans lequel, la discrétisation spatiale du signal est de 10 degrés. Il est possible de restreindre la longueur de ce signal à un seul tour de roue par la combinaison des échantillons situés sur la valeur quasi nulle afin de constituer un signal tour de roue $Sig^{TdR}$. Ce signal 10 nous apprend que ce niveau de discrétisation spatiale permet à minima d'isoler le signal accélérométrique sur un tour de roue puisque nécessairement un échantillon touche une valeur quasi nulle par aire de contact permettant de détecter cet événement dans des conditions standards d'utilisation d'enveloppe pneumatique classique. Bien entendu au-delà de cette discrétisation angulaire maximale, on pourrait ne pas repérer à l'aide du signal accélérométrique le passage du capteur dans l'aire de contact. En se limitant sur un tour de roue complet $Sig^{TdR}$, la valeur moyenne de ce signal atteint 99••% de la valeur de l'accélération de référence $\gamma^{reference}$, ce qui est largement satisfaisant.

Enfin un troisième premier signal $Sig^i$ représenté par les cercles gris clairs référencée 11 correspond au même signal 1 dans lequel, la discrétisation spatiale du signal est de 10 degrés mais en se limitant sur les cinq premiers incréments ce qui correspond à une fraction de tour de roue. La Fig 2 montre un seuil N au travers de la ligne droit en pointillés référencée 3. Ici, le seuil N correspond à cinquante pourcent de la valeur maximal du signal accélérométrique s'étendant sur plus d'un tour sans correction de la gravité. On se rend compte que peu de point des signaux 10 et 11 se situent en dessous de ce seuil N. Et la longueur des signaux 10 et 11 sont choisis afin de respecter que au moins 60 pourcent de la longueur du signal se situent au-dessus de ce seuil N. Dans le cas du signal 11, on est justement à 60 pourcent puisque la longueur du signal 11 vaut 5 et que 2 valeurs sont en dessous de ce seuil N représentant 40% du signal. Dans ce cas la valeur moyenne du signal 11 vaut 90% de l'accélération de référence $\gamma^{reference}$ ce qui est satisfaisant pour avoir une estimation valable de la distance parcourue. Si on avait limité ce signal 11 aux quatre premières valeurs, ce qui ne satisfait pas la condition de longueur du signal au-dessus de N, la valeur moyenne serait tombée à 79 pourcents de l'accélération de référence. Et si on avait pris les 4 dernières valeurs du signal 11, ce qui aurait satisfait aussi la condition par rapport au seuil N, la valeur moyenne aurait été à 110 pourcents de l'accélération de référence, ce qui aurait encore été satisfaisant. De même, on se rend compte qu'une modification du seuil N n'aurait pas changé non plus grand-chose sur le résultat. Cependant, ce seuil N est à bien choisir si on prend en compte le signal brut accélérométrique non corrigé de la gravité qui lui ne passe pas forcément par zéro en raison de la valeur de la gravité.

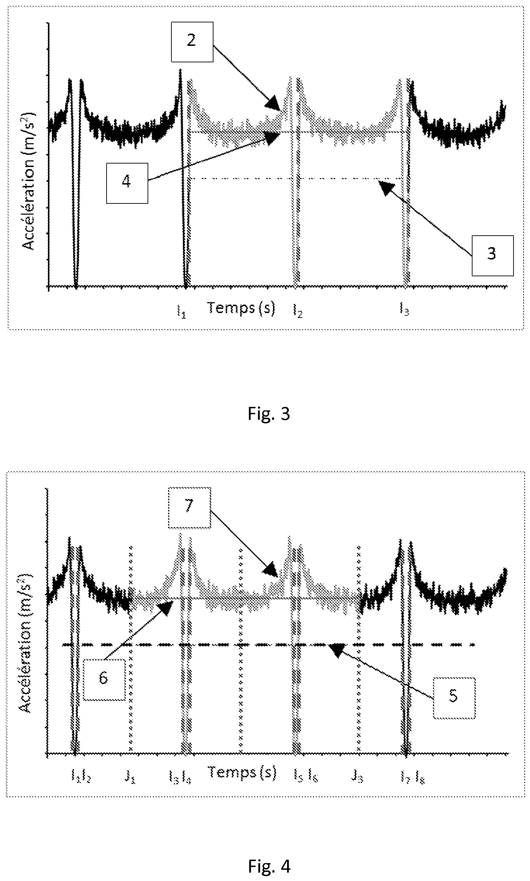

La Fig 3 présente la méthode de détermination d'un signal tour de roue $Sig^{TdR}$ référencé 2 sur le graphe sur un nombre entier de tour de roue. A partir du premier signal Sig', ici corrigé pour mieux expliciter l'exemple, on détermine un seuil E, illustré par la ligne pointillée 3. Ici, le seuil E est pris comme la moitié de l'amplitude maximale du premier signal $Sig^i$ sans aucune correction. On identifie une série d'incréments I lorsque que le premier signal Sig' franchit la ligne pointillée 3 par exemple par le dessous ce qui correspond physiquement à une sortie de l'aire de contact par le capteur lié solidairement en rotation à l'enveloppe pneumatique. Ainsi, on néglige ici les franchissements par le dessus du seuil E par le premier signal $Sig^i$ ce qui correspond à l'entrée de l'aire de contact et qui aurait positionné des incréments intermédiaires I. On délimite alors le premier signal $Sig^i$ à un signal tour de roue $Sig^{TdR}$ référencée 2 entre un premier incrément, ici $I_1$, et un second incrément, ici $I_3$. Le signal tour de roue $Sig^{TdR}$ représente ici le signal accélérométrique du capteur sur deux tours de roue complets.

La valeur seuil E représentée par la ligne pointillée 3 a été évaluée dans notre cas sur une partie du premier signal $Sig^i$ avec une fréquence d'échantillonnage variable. On extrait sur cette partie du premier signal 1, la valeur maximale discrétisée obtenue que l'on nomme MAX. La valeur seuil E est alors une valeur comprise entre 10 et 50% de la valeur MAX, dans notre cas, cette valeur est d'environ 50%.

On calcule comme la valeur moyenne du signal tour de roue $Sig^{TdR}$ référencée 2, ramenée à un seul tour, ce qui correspond à l'accélération de référence $\gamma^{reference}$ qui est représentée par la ligne continue 4 en noir Son évaluation est faite en temps réel, en cumulant les valeurs des incréments u du premier signal tour de roue $Sig^{TdR}$ que l'on divise à la fin du signal tour de roue $Sig^{TdR}$ par le nombre d'incréments du premier signal tour de roue $Sig^{TdR}$. Pour cela, il suffit juste de rechercher le premier franchissement en-dessous du seuil E du premier signal qui détermine le point de départ du signal tour de roue $Sig^{TdR}$ Bien entendu, le calcul peut aussi être fait après que l'enregistrement complet du signal tour $Sig^{TdR}$ de roue 2 a été enregistré et stocké en mémoire.

La Fig 4 est une illustration de la délimitation du signal tour de roue $Sig^{TdR}$ référencé 7 en gris à partir du signal accélérométrique. Ici, c'est le second mode de réalisation de cette délimitation qui est employé.

A partir du signal délivré par le capteur, ici corrigé pour mieux expliciter l'exemple, on détermine un seuil B, illustré par la ligne pointillée 5. On identifie une série d'incréments I lorsque que le premier signal franchit la ligne pointillée 5 ce qui correspond physiquement à une entrée ou une sortie de l'aire de contact par le capteur lié solidairement en rotation à l'enveloppe pneumatique. Ensuite, en prenant dans cette illustration que les incréments I impairs, on construit une série d'incréments J situés de façon équidistante des incréments I impairs. Ces incréments sont repérés par les traits de points verticaux sur la Fig 3. Bien entendu, on peut appliquer la méthode tant que les incréments retenus se situent entre un huitième et sept huitième de la longueur du signal compris entre les deux incréments $I_i$ et $I_{i+1}$.

On délimite alors le signal tour de roue $Sig^{TdR}$ 7 entre un premier incrément, ici J1, et un second incrément, ici J3. Le signal tour de roue $Sig^{TdR}$ 7 représente ici le signal accélérométrique du capteur sur deux tours de roue complets.

La valeur seuil B représentée par la ligne pointillée 5 a été évaluée dans notre cas sur une partie du signal accélérométrique avec une fréquence d'échantillonnage variable. On extrait sur cette partie du signal accélérométrique, la valeur maximale discrétisée obtenue que l'on nomme MAX. La valeur seuil B est alors une valeur comprise entre 10 et 50% de la valeur MAX, dans notre cas, cette valeur est d'environ 50%.

On calcule comme la valeur moyenne du premier signal tour de roue $Sig^{TdR}$ 7, l'accélération de référence $\gamma^{reference}$ qui est représentée par la ligne continue 6 en noir Son évaluation est faite en temps réel, en cumulant les valeurs des incréments u du signal tour de roue entre les incréments J1 et J3 que l'on, divise à la fin du signal tour de roue par le nombre d'incréments u du signal tour de roue $Sig^{TdR}$ 7

Ce second mode de réalisation est la meilleure méthode puisque les erreurs de discrétisation du signal tour de roue $Sig^{TdR}$ sur les bords n'entrainent qu'une faible variation du calcul de l'accélération de référence. En effet, sur ces bords, la sensibilité du signal est faible par rapport à la sensibilité du signal au niveau des incréments I.

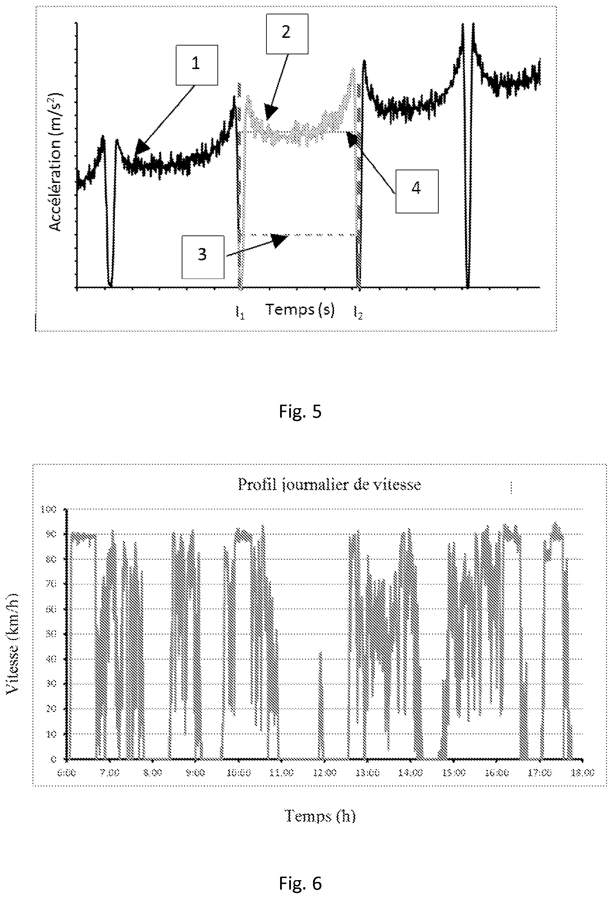

La Fig 5 présente un signal accélérométrique, préalablement corrigé de la gravité terrestre correspondant à l'accélération normale au sommet d'une enveloppe pneumatique de type poids lourd roulant à une vitesse de rotation W variable.

Ici, on détermine un seuil E, représenté par la ligne pointillée 3, pour le signal tour de roue $Sig^{TdR}$ en gris clair référencé 2.

Le seuil E permet d'identifier les incréments I correspondant par exemple à la sortie de l'aire de contact par le capteur. Dans cette analyse, le signal tour de roue $Sig^{TdR}$ est limité à un tour de roue ce qui est préférentiel pour limiter les erreurs liées à la variation de la vitesse de rotation W de l'enveloppe pneumatique. Le seuil E a été choisi afin qu'il corresponde à la moitié de l'accélération de référence du premier signal délimité sur un nombre entier de tour de roue effectuée avant le signal tour de roue 2. On calcule aussi, sur ce signal tour de roue 2, l'accélération de référence $\gamma^{reference}$ comme la valeur moyenne du signal tour de roue 2, illustré par la courbe continue 4.

On notera aussi que du fait de la vitesse de rotation W variable ici en phase d'accélération, la période associée au tour de roue diminue ce qui se traduit par des fronts montants ou descendants de plus en plus proche

La Fig 6 est une illustration du profil de vitesses d'un véhicule poids lourd en usage régional en Europe. Le véhicule était équipé d'un ensemble monté à l'avant du véhicule comprenant un capteur selon l'invention. Un enregistrement de la réponse du capteur a été fait à des intervalles de temps T réguliers de l'ordre de la minute. Pendant une phase de mesure, la fréquence d'échantillonnage du capteur est choisie pour que les conditions de longueur du signal et de pas angulaire minimale soient respectées dans toute la gamme de vitesses liée à l'usage. Un estimatif de la distance parcourue journalière a été effectuée au niveau du dispositif embarqué avec une fréquence de mesure de 1 minutes. Pour cela, la fonction A a été choisis comme le rapport B. Les rayons de roulement $R_P$ et de positionnement Rc du capteur ont été calibrés auparavant sur banc de mesure en condition chargé et non chargé en appliquant les règles de l'ETRTO Par ailleurs, les signaux ont été enregistrés sur un espace mémoire externe qui ont permis d'effectuer d'autres évaluations en modifiant l'intervalle de temps T entre les phases de mesure. Par ailleurs, le kilométrage effectué par le véhicule au cours de la journée a été relevé directement au compteur du véhicule et via un dispositif GPS du commerce.

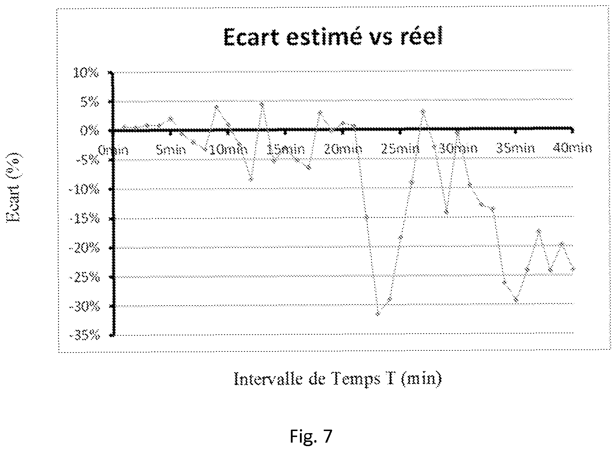

La Fig 7 est un relevé des écart entre le kilométrage relevé sur véhicule et différentes évaluations de la méthode en faisant seulement varier l'intervalle de temps T entre les phases de mesure de 1 minute à 40 minutes par pas de 1 minute. La première évaluation à 1 minute est celle donnée par le dispositif embarqué sur l'ensemble monté. Les autres évaluations ont été réalisées en éliminant des données brutes pour accroître l'intervalle de temps T entre les mesures. Ici, l'intervalle de temps T dans une même évaluation de distance parcourue journalière est resté constant.

On note que si l'intervalle de temps T est inférieure à 10 minutes, l'écart de distance entre la distance enregistrée sur véhicule et celle évaluée par la méthode ne dépasse pas 5 pour cents. En réglant sur ce parcours spécifique, l'intervalle de temps à 20 minutes, l'erreur de l'estimation ne dépasse pas 10 pourcents. De plus, plus l'intervalle de temps T est court, plus l'écart décroit entre la valeur de référence enregistrée sur le véhicule et l'évaluation faite selon la méthode. L'erreur est même insignifiante en dessous d'une valeur de 5 minutes comme intervalle de temps T entre les phases de mesures.


## Revendications

1. Méthode d'obtention de la distance parcourue par une enveloppe pneumatique dans un état monté sur roue afin de constituer un ensemble monté, la dite enveloppe pneumatique ayant un sommet muni d'une bande de roulement pouvant être en contact avec le sol, deux flancs et deux bourrelets de révolution autour d'un axe naturel de rotation et un plan médian, l'intersection du plan médian et de l'axe naturel de rotation définissant un centre roue, comprenant les étapes suivantes :

   - Fixer au moins un capteur sur l'enveloppe pneumatique au droit du sommet ayant une position radiale Rc par rapport à l'axe naturel de rotation dans un état monté sur roue, apte à générer au moins un signal de sortie proportionnel à l'accélération subie par ledit capteur dans l'enveloppe pneumatique;
   - Mettre l'ensemble monté en condition de roulage à une vitesse de rotation W, soumise à une charge Z;
   - Réaliser l'acquisition après un intervalle de temps T d'un premier signal $Sig^i$ comprenant au moins l'amplitude de l'accélération selon la direction normale au sommet dans lequel les valeurs du premier signal $Sig^i$ inférieures à un seuil N représentent moins de 40 pour cent de la longueur du premier signal $Sig^i$ ; **caractérisée par les étapes suivantes** :

      - Identifier une première grandeur de référence $V^{reference}_i$ définie comme la racine carrée de la valeur moyenne du premier signal $Sig^i$ ;
      - Déterminer la distance parcourue D pendant l'intervalle de temps T à partir de la formule suivante :

      [Math1]

      $$D = A * T * V_i^{reference}$$

      Où A est une fonction de l'enveloppe pneumatique, au moins proportionnelle à la racine carrée du rayon de roulement correspondant à la plus faible distance entre le centre roue et le sol en condition chargée.

2. Méthode d'obtention de la distance parcourue par une enveloppe pneumatique selon la revendication 1 dans laquelle l'intervalle de temps T étant fixe entre chaque prises de mesures ,et préférentiellement si il n'est pas possible d'obtenir un premier signal $Sig^i$ à un instant t, la grandeur de référence $V^{reference}_i$ prend une valeur forfaitaire $V^{forfaitaire}$, une distance totale parcourue Df par l'enveloppe pneumatique est déterminée par la formule suivante :

[Math 3]

$$D_f = T * \sum_{i=0}^{n} \left( A * V_i^{reference} \right)$$

**3.** Méthode d'obtention de la distance parcourue par une enveloppe pneumatique selon la revendication 2 dans laquelle la fonction A étant une constante, la distance totale parcourue Df est déterminée par la formule suivante :

[Math 4]

$$D_f = T * A * \sum_{i=0}^{n} V_i^{reference}$$

**4.** Méthode d'obtention de la distance parcourue par une enveloppe pneumatique selon l'une des revendications 1 à 3 dans laquelle le premier signal Sig' étant délimité sur un nombre $N_{TdR}$ de tours de roue, $N_{TdR}$ étant supérieur ou égale à 1, préférentiellement $N_{TdR}$ est un entier, afin de construire un signal tour de roue $Sig^{TdR}_i$, la grandeur de référence $V^{reference}_i$ est la racine carrée de la valeur moyenne du signal tour de roue $Sig^{TdR}_i$, ramené sur un tour.

**5.** Méthode d'obtention de la distance parcourue par une enveloppe pneumatique selon la revendication 4 dans laquelle, ayant identifié une première série d'incrément I correspondant à l'abscisse u du au moins un premier signal $Sig^i$ où le premier signal Sig' franchit une valeur seuil B, on délimite le premier signal $Sig^i$ entre un premier incrément $I_{min}$ et un second incrément $I_{max}$ , avec max égal à min+2*k, k étant un entier naturel strictement positif, sur un nombre entier de tour de roue $N_{TdR}$ défini par la formule :

[Math 5]

$$N_{TdR} = \frac{(max - min)}{2}$$

**6.** Méthode d'obtention de la distance parcourue par une enveloppe pneumatique selon la revendication 5 dans laquelle, on identifie la première série d'incréments I par la combinaison des étapes suivantes :

- Définir la valeur seuil B qui est une valeur comprise entre 0,1 et 0,5 du au moins un maximum de la au moins une partie du premier signal $Sig^i$ ;
- Déterminer un second signal d'abscisse u comme une fonction de la au moins une partie du premier signal $Sig^i$ et de la valeur seuil B;
- Identifier la première série des incréments I correspondant à l'abscisse u de la au moins une partie du premier signal $Sig^i$ où le second signal franchit un seuil E, préférentiellement le second signal étant la différence entre le premier signal $Sig^i$ et la valeur seuil B, le seuil E est la valeur nulle ou le second signal étant le rapport entre le premier signal $Sig^i$ et la valeur seuil B, le seuil E est la valeur unité.

**7.** Méthode d'obtention de la distance parcourue par une enveloppe pneumatique selon l'une quelconque des revendications 5 à 6 dans laquelle, l'identification des incréments comprend les étapes suivantes ;

- Créer une seconde série d'incréments J correspondant à l'abscisse u médian entre les abscisses u des incréments I de parités identiques et consécutifs,
- Construire le signal tour de roue $Sig^{TdR}_i$ entre un premier incrément $J_{min}$ et un second incrément $J_{max}$, min et max étant de même parité.

**8.** Méthode d'obtention de la distance parcourue par une enveloppe pneumatique selon l'une quelconque des revendications 1 à 7 dans laquelle, l'acquisition du premier signal $Sig^i$ a lieu si la vitesse de rotation W de l'enveloppe pneumatique est supérieure à un seuil $W_{seuil}$ définie par la formule suivante :

[Math 6]

$$W_{seuil} = \frac{12}{\sqrt{Dev}}$$

Où Dev est le développement de l'enveloppe pneumatique.

9. Méthode d'obtention de la distance parcourue par une enveloppe pneumatique selon l'une quelconque des revendications 1 à 8 dans laquelle, l'intervalle de temps T entre deux évaluations de la grandeur de référence $V^{reference}$ est inférieur ou égal à 10 minutes, préférentiellement inférieur ou égale à 5 minutes, très préférentiellement inférieur à 2 minutes.

10. Méthode d'obtention de la distance parcourue par une enveloppe pneumatique selon l'une quelconque des revendications 1 à 9 dans laquelle, l'enveloppe pneumatique définissant un rayon de roulement $R_P$, la fonction A est proportionnelle au rapport B suivant :

[Math 7]

$$B = \frac{R_P}{\sqrt{R_C}}$$

11. Méthode d'obtention de la distance parcourue par une enveloppe pneumatique selon l'une quelconque des revendications 1 à 10 dans laquelle le rayon de roulement $R_P$ est fonction de la charge Z portée par l'enveloppe pneumatique.

12. Méthode d'obtention de la distance parcourue par une enveloppe pneumatique selon l'une quelconque des revendications 1 à 11 dans laquelle, l'enveloppe pneumatique étant pressurisée à une pression de gonflage P, le rayon de roulement $R_P$ et la position radiale $R_C$ sont fonction de la pression de gonflage P de l'enveloppe pneumatique.

13. Méthode d'obtention de la distance parcourue par une enveloppe pneumatique selon l'une quelconque des revendications 1 à 12 dans laquelle le rayon de roulement $R_P$ est fonction de la distance totale parcourue par l'enveloppe pneumatique.

14. Méthode d'obtention de la distance parcourue par une enveloppe pneumatique selon l'une quelconque des revendications 1 à 13 dans laquelle, l'acquisition du premier signal $Sig^i$ est effectuée à une fréquence d'échantillonnage constante.

15. Méthode d'obtention de la distance parcourue par une enveloppe pneumatique selon l'une quelconque des revendications 1 à 14 dans laquelle la discrétisation spatiale d'échantillonnage du premier signal $Sig^i$ est inférieure à 10 degrés, préférentiellement inférieure à 6 degrés, très préférentiellement inférieure à 3 degrés.

**Patentansprüche**

1. Verfahren zur Feststellung der Strecke, die von einem Luftreifen zurückgelegt wird, der auf einem Rad montiert ist, um eine montierte Einheit zu bilden, wobei der Luftreifen einen Scheitel, der über eine Lauffläche verfügt, die mit dem Boden in Kontakt sein kann, zwei Flanken und zwei Wulste aufweist, die sich um eine natürliche Drehachse und eine Mittelebene drehen, wobei der Schnittpunkt zwischen der Mittelebene und der natürlichen Drehachse eine Radmitte definiert, beinhaltend die folgenden Schritte:

- Befestigen mindestens eines Sensors an dem Luftreifen direkt unter dem Scheitel, der in einem radmontierten Zustand eine radiale Position $R_C$ in Bezug auf die natürliche Drehachse aufweist und dazu fähig ist, mindestens ein Ausgangssignal zu generieren, das zu der Beschleunigung, die der Sensor in dem Luftreifen erfährt, proportional ist;
- Versetzen der montierten Einheit in einen Fahrzustand mit einer Drehgeschwindigkeit W und unter einer Last Z;
- Durchführen der Erfassung, nach einem Zeitintervall T, eines ersten Signals $Sig^i$, das mindestens die Amplitude der Beschleunigung gemäß der zu dem Scheitel senkrechten Richtung beinhaltet, wobei die Werte des ersten Signals $Sig^i$, die kleiner als eine Schwelle N sind, weniger als 40 Prozent der Länge des ersten Signals $Sig^i$ darstellen;

**gekennzeichnet durch die folgenden Schritte:**

- Identifizieren einer ersten Referenzgröße $V^{referenz}_i$, die als die Quadratwurzel des Mittelwerts des ersten Signals $Sig^i$ definiert ist;
- Bestimmen der während des Zeitintervalls T zurückgelegten Strecke D anhand der folgenden Formel:

[Math1]

$$D = A * T * V_i^{referenz}$$

wobei A eine Funktion des Luftreifens ist, die mindestens zu der Quadratwurzel des Rollradius, der dem kleinsten Abstand zwischen der Radmitte und dem Boden in belastetem Zustand entspricht, proportional ist.

2. Verfahren zur Feststellung der von einem Luftreifen zurückgelegten Strecke nach Anspruch 1, wobei, wenn das Zeitintervall T zwischen den jeweiligen Messungen fest ist und es vorzugsweise nicht möglich ist, ein erstes Signal $Sig^i$ zu einem Zeitpunkt t festzustellen, die Referenzgröße $V^{referenz}_i$ einen Pauschalwert $V^{pauschal}$ annimmt, eine durch den Luftreifen zurückgelegte Gesamtstrecke $D_f$ durch die folgende Formel bestimmt wird:

[Math 3]

$$D_f = T * \sum_{i=0} \left( A * V_i^{referenz} \right)$$

3. Verfahren zur Feststellung der von einem Luftreifen zurückgelegten Strecke nach Anspruch 2, wobei, wenn die Funktion A eine Konstante ist, die zurückgelegte Gesamtstrecke $D_f$ durch die folgende Formel bestimmt wird:

[Math 4]

$$D_f = T * A * \sum_{i=0} V_i^{referenz}$$

4. Verfahren zur Feststellung der von einem Luftreifen zurückgelegten Strecke nach einem der Ansprüche 1 bis 3, wobei, wenn das erste Signal $Sig^i$ auf eine Zahl $N_{TdR}$ von Radumdrehungen begrenzt wird, wobei $N_{TdR}$ größer als oder gleich 1 ist, $N_{TdR}$ vorzugsweise eine ganze Zahl ist, um ein Radumdrehungssignal $Sig^{TdR}_i$ zu erstellen, die Referenzgröße $V^{referenz}_i$ die Quadratwurzel des Mittelwerts des Radumdrehungssignals $Sig^{TdR}_i$ bezogen auf eine Umdrehung ist.

5. Verfahren zur Feststellung der von einem Luftreifen zurückgelegten Strecke nach Anspruch 4, wobei, nach Identifizierung einer ersten Folge von Inkrementen I, die der Abszisse u des mindestens einen ersten Signals $Sig^i$ entsprechen, wo das erste Signal $Sig^i$ einen Schwellenwert B durchquert, das erste Signal $Sig^i$ zwischen einem ersten Inkrement $I_{min}$ und einem zweiten Inkrement $I_{max}$, mit max gleich min+2*k, wobei k eine strikt positive natürliche Zahl ist, auf eine ganze Zahl von Radumdrehungen $N_{TdR}$ begrenzt wird, die durch folgende Formel definiert wird:

[Math 5]

$$N_{TdR} = \frac{(max - min)}{2}$$

6. Verfahren zur Feststellung der von einem Luftreifen zurückgelegten Strecke nach Anspruch 5, wobei die erste Folge von Inkrementen I durch die Kombination der folgenden Schritte identifiziert wird:

- Definieren des Schwellenwerts B, der ein Wert zwischen 0,1 und 0,5 des mindestens einen Maximums des mindestens einen Teils des ersten Signals $Sig^i$ ist;
- Bestimmen eines zweiten Signals der Abszisse u als eine Funktion des mindestens einen Teils des ersten

Signals $Sig^i$ und des Schwellenwerts B;

- Identifizieren der ersten Folge von Inkrementen I, die der Abszisse u des mindestens einen Teils des ersten Signals $Sig^i$ entsprechen, wo das zweite Signal eine Schwelle E durchquert, wobei vorzugsweise, wenn das zweite Signal die Differenz zwischen dem ersten Signal $Sig^i$ und dem Schwellenwert B ist, die Schwelle E der Wert null ist oder, wenn das zweite Signal das Verhältnis zwischen dem ersten Signal $Sig^i$ und dem Schwellenwert B ist, die Schwelle E der Wert eins ist.

7. Verfahren zur Feststellung der von einem Luftreifen zurückgelegten Strecke nach einem beliebigen der Ansprüche 5 bis 6, wobei die Identifizierung der Inkremente die folgenden Schritte beinhaltet;

   - Erzeugen einer zweiten Folge von Inkrementen J, die der mittleren Abszisse u zwischen den Abszissen u der Inkremente I mit identischen und aufeinanderfolgenden Paritäten entsprechen,
   - Erstellen des Radumdrehungssignals $Sig^{TdR}_i$ zwischen einem ersten Inkrement $J_{min}$ und einem zweiten Inkrement $J_{max}$, wobei min und max gleicher Parität sind.

8. Verfahren zur Feststellung der von einem Luftreifen zurückgelegten Strecke nach einem beliebigen der Ansprüche 1 bis 7, wobei die Erfassung des ersten Signals $Sig^i$ stattfindet, wenn die Drehgeschwindigkeit W des Luftreifens größer als eine Schwelle $W_{schwelle}$ ist, die durch die folgende Formel definiert wird:

[Math 6]

$$W_{schwelle} = \frac{12}{\sqrt{Dev}}$$

wobei Dev die Entwicklung des Luftreifens ist.

9. Verfahren zur Feststellung der von einem Luftreifen zurückgelegten Strecke nach einem beliebigen der Ansprüche 1 bis 8, wobei das Zeitintervall T zwischen zwei Beurteilungen der Referenzgröße $V^{referenz}$ kleiner als oder gleich 10 Minuten, vorzugsweise kleiner als oder gleich 5 Minuten, sehr bevorzugt kleiner als 2 Minuten ist.

10. Verfahren zur Feststellung der von einem Luftreifen zurückgelegten Strecke nach einem beliebigen der Ansprüche 1 bis 9, wobei, wenn der Luftreifen einen Rollradius $R_P$ definiert, die Funktion A zu dem folgenden Verhältnis B proportional ist:

[Math 7]

$$B = \frac{R_P}{\sqrt{R_C}}$$

11. Verfahren zur Feststellung der von einem Luftreifen zurückgelegten Strecke nach einem beliebigen der Ansprüche 1 bis 10, wobei der Rollradius $R_P$ von der Last Z abhängig ist, die durch den Luftreifen getragen wird.

12. Verfahren zur Feststellung der von einem Luftreifen zurückgelegten Strecke nach einem beliebigen der Ansprüche 1 bis 11, wobei, wenn der Luftreifen auf einen Luftdruck P gebracht ist, der Rollradius $R_P$ und die radiale Position $R_C$ von dem Luftdruck P des Luftreifens abhängig sind.

13. Verfahren zur Feststellung der von einem Luftreifen zurückgelegten Strecke nach einem beliebigen der Ansprüche 1 bis 12, wobei der Rollradius $R_P$ von der durch den Luftreifen zurückgelegten Gesamtstrecke abhängig ist.

14. Verfahren zur Feststellung der von einem Luftreifen zurückgelegten Strecke nach einem beliebigen der Ansprüche 1 bis 13, wobei die Erfassung des ersten Signals $Sig^i$ mit einer konstanten Abtastfrequenz erfolgt.

15. Verfahren zur Feststellung der von einem Luftreifen zurückgelegten Strecke nach einem beliebigen der Ansprüche 1 bis 14, wobei die räumliche Diskretisierung der Abtastung des ersten Signals $Sig^i$ kleiner als 10 Grad, vorzugsweise kleiner als 6 Grad, sehr bevorzugt kleiner als 3 Grad ist.

**Claims**

1. Method for obtaining the distance travelled by a tyre casing in a state mounted on-wheel in order to form a mounted assembly, said tyre casing having a crown equipped with a tread able to make contact with the ground, two sidewalls and two beads of revolution about a natural axis of rotation and a median plane, the intersection of the median plane and of the natural axis of rotation defining a wheel centre, comprising the following steps:

   - fastening to the tyre casing plumb with the crown at least one sensor having a radial position Rc with respect to the natural axis of rotation in an on-wheel mounted state and able to generate at least one output signal proportional to the acceleration experienced by said sensor in the tyre casing;
   - placing the mounted assembly under conditions in which it may rotate at a rotational speed W, and is loaded with a load Z;
   - acquiring, after a time interval T, a first signal $Sig^i$ comprising at least the amplitude of the acceleration in the direction normal to the crown, values of the first signal $Sig^i$ less than a threshold N representing less than 40 percent of the length of the first signal $Sig^i$;

   charaterized by the following steps:

   - identifying a first reference quantity $V_i^{reference}$ defined as the square root of the mean value of the first signal $Sig^i$;
   - determining the distance D travelled during the time interval T using the following formula:

   [Math 1]

   $$D = A * T * V_i^{reference}$$

   where A is dependent on the tyre casing, and at least proportional to the square root of the rolling radius corresponding to the smallest distance between the wheel centre and the ground under loaded conditions.

2. Method for obtaining the distance travelled by a tyre casing according to Claim 1, wherein, the time interval T remaining the same between each measurement, and preferably if it is not possible to obtain a first signal $Sig^i$ at a time t, the reference quantity $V_i^{reference}$ takes a set value $V^{set}$, and a total distance Df travelled by the tyre casing is determined using the following formula:

   [Math 3]

   $$D_f = T * \sum_{i=0}^{n} \left( A * V_i^{reference} \right)$$

3. Method for obtaining the distance travelled by a tyre casing according to Claim 2, wherein the function A being a constant, the total distance Df travelled is determined using the following formula:

   [Math 4]

   $$D_f = T * A * \sum_{i=0}^{n} V_i^{reference}$$

4. Method for obtaining the distance travelled by a tyre casing according to one of Claims 1 to 3, wherein the first signal $Sig^i$ being demarcated over a number $N_{TdR}$ of wheel revolutions, $N_{TdR}$ being greater than or equal to 1, and $N_{TdR}$ preferably being an integer, in order to construct a wheel-revolution signal $Sig^{TdR}i$, the reference quantity $V_i^{reference}$ is the square root of the mean value of the wheel-revolution signal $Sig^{TdR}_i$ over one revolution.

5. Method for obtaining the distance travelled by a tyre casing according to Claim 4, wherein, having identified a first series of increments I corresponding to the abscissa u of at least a first signal $Sig^i$ where the first signal $Sig^i$ crosses

a threshold value B, the first signal $Sig^i$ is demarcated between a first increment $I_{min}$ and a second increment $I_{max}$ with max equal to min+2*k, k being a strictly positive natural integer, over an integer number $N_{TdR}$ of wheel revolutions defined by the formula:

[Math 5]

$$N_{TdR} = \frac{(max - min)}{2}$$

6. Method for obtaining the distance travelled by a tyre casing according to Claim 5, wherein the first series of increments I is identified using the combination of the following steps:

- defining the threshold value B, which is a value comprised between 0.1 and 0.5 of the at least one maximum of the at least one portion of the first signal $Sig^i$;
- determining a second signal of abscissa u depending on the at least one portion of the first signal $Sig^i$ and the threshold value B;
- identifying the first series of increments I corresponding to the abscissa u of the at least one portion of the first signal $Sig^i$ where the second signal crosses a threshold E, the second signal preferably being the difference between the first signal $Sig^i$ and the threshold value B, the threshold E is the value zero, or the second signal being the ratio between the first signal $Sig^i$ and the threshold value B, the threshold E is unity.

7. Method for obtaining the distance travelled by a tyre casing according to either one of Claims 5 and 6, wherein the identification of the increments comprises the following steps:

- creating a second series of increments J corresponding to the median abscissa u between the abscissae u of increments I of consecutive and identical parities,
- constructing the wheel-revolution signal $Sig^{TdR}_i$ between a first increment $J_{min}$ and a second increment $J_{max}$, min and max being of same parity.

8. Method for obtaining the distance travelled by a tyre casing according to any one of Claims 1 to 7, wherein, the first signal $Sig^i$ is acquired if the rotational speed W of the tyre casing is greater than a threshold $W_{threshold}$ defined by the following formula:

[Math 6]

$$W_{threshold} = \frac{12}{\sqrt{Dev}}$$

where Dev is the distance travelled by the tyre casing in one revolution.

9. Method for obtaining the distance travelled by a tyre casing according to any one of Claims 1 to 8, wherein the time interval T between two evaluations of the reference quantity $V^{reference}$ is less than or equal to 10 minutes, preferably less than or equal to 5 minutes, and very preferably less than 2 minutes.

10. Method for obtaining the distance travelled by a tyre casing according to any one of Claims 1 to 9, wherein, the tyre casing defining a rolling radius $R_P$, the function A is proportional to the following ratio B:

[Math 7]

$$B = \frac{R_P}{\sqrt{R_c}}$$

11. Method for obtaining the distance travelled by a tyre casing according to any one of Claims 1 to 10, wherein the rolling radius $R_P$ is dependent on the load Z borne by the tyre casing.

12. Method for obtaining the distance travelled by a tyre casing according to any one of Claims 1 to 11, wherein, the tyre casing being inflated to an inflation pressure P, the rolling radius $R_P$ and the radial position Rc are dependent on the inflation pressure P of the tyre casing.

13. Method for obtaining the distance travelled by a tyre casing according to any one of Claims 1 to 12 wherein the rolling radius $R_P$ is dependent on the total distance travelled by the tyre casing.

14. Method for obtaining the distance travelled by a tyre casing according to any one of Claims 1 to 13, wherein the first signal $Sig^i$ is acquired at a constant sampling frequency.

15. Method for obtaining the distance travelled by a tyre casing according to any one of Claims 1 to 14, wherein the spatial discretization of sampling of the first signal $Sig^i$ is less than 10 degrees, preferably less than 6 degrees, and very preferably less than 3 degrees.

Fig. 1

Fig. 2

Fig. 3

Fig. 4

Fig. 5

Fig. 6

Fig. 7

## RÉFÉRENCES CITÉES DANS LA DESCRIPTION

**Documents brevets cités dans la description**

- US 9566834 B2
- US 9050865 B2
- EP 3489044 A1
- WO 2019101849 A1
- EP 3299765 A1